# EUROPEAN PATENT APPLICATION

(11) **EP 4 707 143 A1**
(43) Date of publication of application: **11.03.2026**
(21) Application number: 25200647.3
(22) Date of filing: 05.09.2025
(51) Int. Cl.: B62J 43/16, B62J 43/28, B62K 11/04, B62M 7/04

(54) **SADDLE RIDING TYPE VEHICLE**

(30) Priority: 06.09.2024 JP 2024153792
(71) Applicant: HONDA MOTOR CO., LTD., Tokyo 105-8404 (JP)
(72) Inventor: KINOSHITA, Masayuki, Tokyo, 105-8404 (JP); FURUYAMA, Takuya, Tokyo, 105-8404 (JP); SAITO, Akio, Tokyo, 105-8404 (JP); ISHII, Naoki, Tokyo, 105-8404 (JP)
(74) Representative: Dehns

(57) **Abstract**

A saddle riding type electric vehicle (10) includes: a vehicle body frame (18); a drive unit (26) supported by the vehicle body frame (18); and a battery (24) that is supported by the vehicle body frame (18) and supplies electrical power to the drive unit (26). The battery (24) is fastened to a lower frame (46) of the vehicle body frame (18), the drive unit (26) is fastened to a pivot frame (44) of the vehicle body frame (18), and the drive unit (26) and the battery (24) are fastened to each other.

## Description

### BACKGROUND OF THE INVENTION

### FIELD OF THE INVENTION

The present disclosure relates to a saddle riding type vehicle.

### DESCRIPTION OF THE RELATED ART

JP 7055216 B2 discloses an electric saddle riding type vehicle. The saddle riding type vehicle includes a vehicle body frame, a drive unit, and a battery. The drive unit and the battery are supported by the vehicle body frame. The battery supplies electrical power to the drive unit.

### SUMMARY OF THE INVENTION

It is desired that the drive unit and the battery can be reliably fixed in a state where the vehicle body frame is moderately bendable.

Viewed from one aspect the present invention provides a saddle riding type vehicle comprising: a vehicle body frame that includes a head pipe, a main frame extending rearwardly from the head pipe, a lower frame positioned below the main frame and extending rearwardly and downwardly, and a pivot frame extending downwardly from a rear end part of the main frame; a drive unit supported by the vehicle body frame; and a battery supported by the vehicle body frame and configured to supply electrical power to the drive unit, wherein the battery is fastened to the lower frame, the drive unit is fastened to the pivot frame, and the drive unit and the battery are fastened to each other.

According to the present disclosure, the battery is fastened to the lower frame without being fastened to the pivot frame. The drive unit is fastened to the pivot frame without being fastened to the lower frame. The lower frame and the pivot frame are indirectly connected via the battery and the drive unit. According to this feature, the drive unit and the battery can be reliably fixed in a state where the vehicle body frame is moderately bendable.

The above and other objects, features, and advantages of at least preferred embodiments of the present invention will become more apparent from the following description when taken in conjunction with the accompanying drawings, in which a preferred embodiment of the present invention is shown by way of illustrative example.

### BRIEF DESCRIPTION OF THE DRAWINGS

FIG. 1 is a left side view of a saddle riding type electric vehicle;
FIG. 2 is a plan view of the saddle riding type electric vehicle;
FIG. 3 is a right side view of the saddle riding type electric vehicle;
FIG. 4 is a perspective view of a battery and a lower frame;
FIG. 5 is a bottom view showing fastening of a rear part of a transmission and a lower end part of a pivot frame;
FIG. 6 is a cross-sectional view taken along line VI-VI of FIG. 3;
FIG. 7 is a perspective view showing fastening of a lower end part of the lower frame and a front part of a transmission case to a lower part of the battery;
FIG. 8 is a cross-sectional view taken along line VIII-VIII of FIG. 3; and
FIG. 9 is a perspective view showing fastening of a rear part of the battery and an upper part of a motor.

### DETAILED DESCRIPTION OF THE INVENTION

An electric saddle riding type vehicle (hereinafter referred to as a saddle riding type electric vehicle) includes a vehicle body frame, a drive unit, and a battery.

The drive unit and the battery are supported by the vehicle body frame. The battery supplies electrical power to the drive unit.

In order to support the drive unit and the battery, the vehicle body frame needs to have a certain degree of rigidity. However, it is not necessarily good that the rigidity of the vehicle body frame increases. It is desired to improve the riding comfort of the rider of the saddle riding type electric vehicle and to improve the dynamic performance of the saddle riding type electric vehicle by allowing the vehicle body frame to be moderately bendable.

For example, in the case where the saddle riding type electric vehicle is a vehicle for off road racing (trials vehicle), the trials vehicle needs to make a large jump to climb over an obstacle or the like. For this purpose, namely, in order to climb over the obstacle or the like, it is necessary to use the bending of the vehicle body frame in addition to the body action of the rider who rides on the trials vehicle. In order to allow the vehicle body frame to be sufficiently bendable, the vehicle body frame needs to be thin and lightweight. Further, it is necessary to design the vehicle body frame so that the rider who rides on the trials vehicle and the center of gravity of the body of the saddle riding type electric vehicle including the vehicle body frame are as close as possible to each other.

A diamond frame is known in which a drive unit functions as a part of a vehicle body frame. In the case where the diamond frame is configured by attaching the drive unit to the vehicle body frame, the degree of freedom in setting the rigidity of the drive unit is lower than that of the vehicle body frame, and therefore, the rigidity of the vehicle body frame becomes too high, and the vehicle body frame may not be able to be bent. On the other hand, if the vehicle body frame becomes more easily bent due to the reduction in the number of fixing points (fastening points) at which the drive unit is fixed (fastened) to the vehicle body frame, the drive unit cannot be supported appropriately. Further, if the vehicle body frame is bent by the motive power output from the drive unit, a power loss may occur in the saddle riding type electric vehicle.

In the saddle riding type electric vehicle according to the present disclosure, the drive unit and the battery can be reliably fixed in a state where the vehicle body frame is moderately bendable, as described in detail by way of example in relation to an embodiment below.

### (Embodiment)

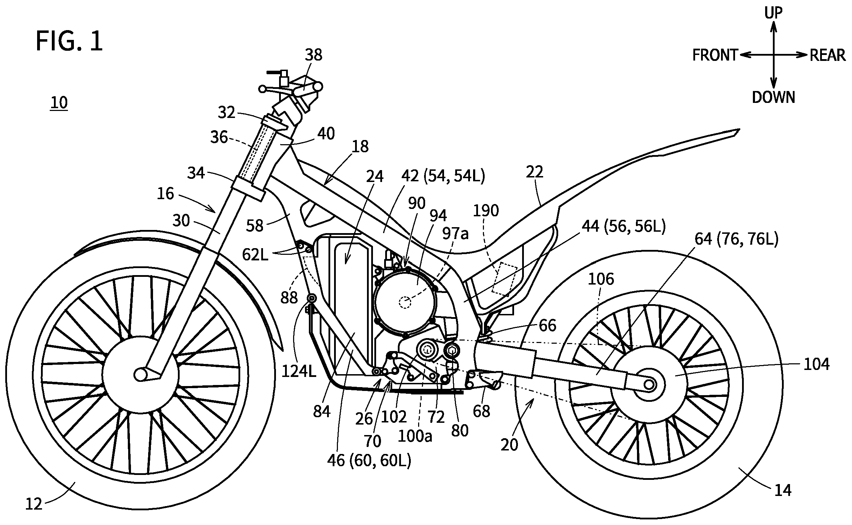

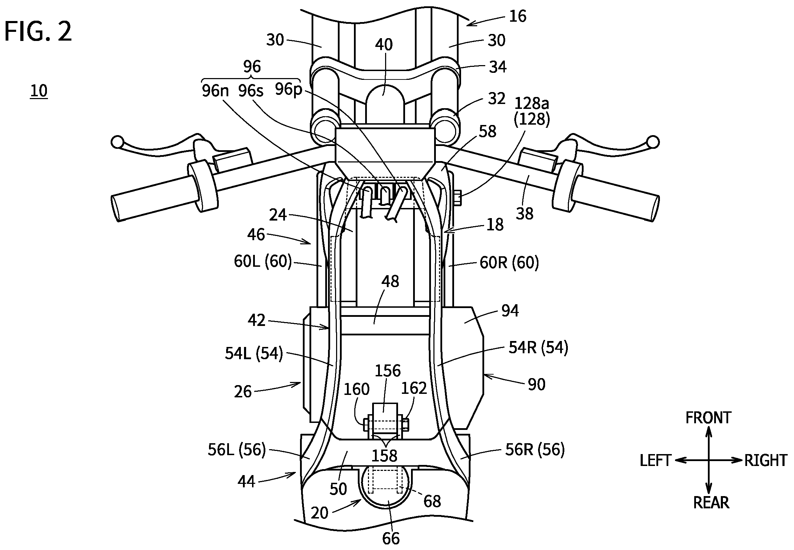

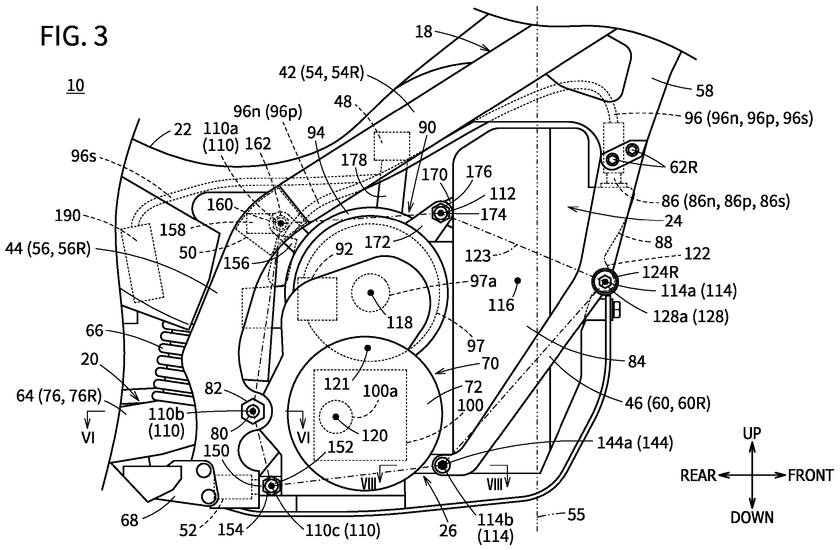

FIG. 1 is a left side view of a saddle riding type electric vehicle 10 according to an embodiment. FIG. 2 is a plan view of the saddle riding type electric vehicle 10. In FIG. 2, a front wheel 12, a rear wheel 14, and a seat 22 (refer to FIG. 1), which will be described later, are omitted from illustration. FIG. 3 is a right side view of the saddle riding type electric vehicle 10. In FIG. 3, the front wheel 12 and the rear wheel 14 (refer to FIG. 1) are omitted from illustration. In the following description, a frontward-rearward direction, a leftward-rightward direction, and an upward-downward direction will be described by assuming a direction, in which the saddle riding type electric vehicle 10 shown in FIG. 1 to FIG. 3 moves frontward, as a frontward direction.

The frontward-rearward direction includes a frontward direction and a rearward direction. The frontward direction is a direction in which the saddle riding type electric vehicle 10 moves frontward. The rearward direction is an opposite direction to the frontward direction. The leftward-rightward direction includes a leftward direction and a rightward direction. The leftward-rightward direction is a vehicle widthwise direction of the saddle riding type electric vehicle 10, and is a direction that is perpendicular to the frontward-rearward direction. The leftward direction is a direction toward the left side when a rider is riding on the saddle riding type electric vehicle 10 and is facing frontward. The rightward direction is an opposite direction to the leftward direction, and is a direction toward the right side when the rider is riding on the saddle riding type electric vehicle 10 and is facing frontward. The upward-downward direction includes an upward direction and a downward direction. The upward-downward direction is a direction that is perpendicular to the frontward-rearward direction and the leftward-rightward direction. The upward direction is a direction toward the upper side of the saddle riding type electric vehicle 10 that is in contact with a horizontal surface. The downward direction is an opposite direction to the upward direction.

As shown in FIG. 1, the saddle riding type electric vehicle 10, for example, is a two-wheeled electric vehicle, although the present disclosure is not necessarily limited to this feature. The saddle riding type electric vehicle 10, for example, is a vehicle for off road racing (trials vehicle), although the present disclosure is not necessarily limited to this feature.

The saddle riding type electric vehicle 10 is equipped with the front wheel 12, the rear wheel 14, a front wheel suspension unit 16, a vehicle body frame 18, a rear wheel suspension unit 20, the seat 22, a battery 24, and a drive unit 26.

The front wheel 12 is disposed on a front side of the saddle riding type electric vehicle 10. The front wheel 12 is supported in a steerable manner by the front wheel suspension unit 16.

The front wheel suspension unit 16 includes a pair of left and right front forks 30, a top bridge 32, a bottom bridge 34, a steering stem 36, and a steering handle 38.

As shown in FIG. 2, the pair of left and right front forks 30 are arranged alongside one another with a gap therebetween in the vehicle widthwise direction. As shown in FIG. 1, a lower end part of each of the pair of left and right front forks 30 pivotally supports the front wheel 12.

As shown in FIG. 2, the top bridge 32 extends in the vehicle widthwise direction. Upper end parts of the pair of left and right front forks 30 are connected to both end parts of the top bridge 32.

At a location below the top bridge 32, the bottom bridge 34 extends in the vehicle widthwise direction. Intermediate parts between the upper end parts and the lower end parts of the pair of left and right front forks 30 are connected to both end parts of the bottom bridge 34.

As shown in FIG. 1, a head pipe 40 of the vehicle body frame 18, which will be described later, is disposed between the top bridge 32 and the bottom bridge 34. The head pipe 40 is disposed between a central part of the top bridge 32 and a central part of the bottom bridge 34 at a location between the pair of left and right front forks 30 (refer to FIG. 2).

The steering stem 36 passes through the head pipe 40. The steering stem 36 is pivotally supported on the head pipe 40. A lower end part of the steering stem 36 is connected to the bottom bridge 34. An upper end part of the steering stem 36 is connected to the top bridge 32.

The steering handle 38 is connected to an upper part of the top bridge 32. The steering handle 38 serves to steer the front wheel 12 by an operation of the rider.

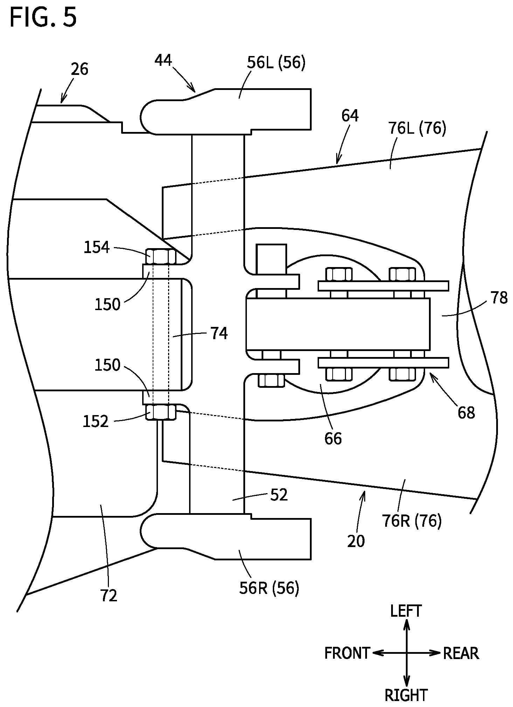

As shown in FIG. 1, the vehicle body frame 18 includes the head pipe 40, a main frame 42, a pivot frame 44, a lower frame 46, a first cross pipe 48 (refer to FIG. 2), a second cross pipe 50, and a third cross pipe 52 (refer to FIG. 5).

The main frame 42 extends rearwardly from the head pipe 40. The main frame 42 is positioned downwardly as it goes rearwardly.

As shown in FIG. 2, the main frame 42 includes a pair of left and right partial main frames 54. The pair of left and right partial main frames 54 are formed from a left side partial main frame 54L, which is the partial main frame 54 on the left side, and a right side partial main frame 54R, which is the partial main frame 54 on the right side.

The left side partial main frame 54L and the right side partial main frame 54R are arranged to be separated from each other in the leftward-rightward direction (the vehicle widthwise direction). The left side partial main frame 54L extends leftwardly and rearwardly from the head pipe 40 (refer to FIG. 1). The right side partial main frame 54R extends rightwardly and rearwardly from the head pipe 40.

As shown in FIG. 2, as viewed in plan, front side portions of the pair of left and right partial main frames 54 overlap the battery 24. Specifically, at a location where the distance in the vehicle widthwise direction between the left side partial main frame 54L and the right side partial main frame 54R is greatest, the front side portions of the pair of left and right partial main frames 54 and the battery 24 overlap one another as viewed in plan.

Further, as shown in FIG. 3, the two-dot dashed line that extends in the upward-downward direction of the saddle riding type electric vehicle 10 is a straight line 55 that passes through the location where the distance in the vehicle widthwise direction between the left side partial main frame 54L and the right side partial main frame 54R is greatest (refer to FIG. 2). The battery 24 and the straight line 55 overlap each other in a side view.

As shown in FIG. 1, the pivot frame 44 extends downwardly from a rear end part of the main frame 42. An upper end part of the pivot frame 44 is connected, by welding or the like, to the rear end part of the main frame 42. Moreover, a rear part of the main frame 42 may be extended downwardly, and the extended portion may serve as the pivot frame 44.

As shown in FIG. 2, the pivot frame 44 includes a pair of left and right partial pivot frames 56. The pair of left and right partial pivot frames 56 are formed from a left side partial pivot frame 56L, which is the partial pivot frame 56 on the left side, and a right side partial pivot frame 56R, which is the partial pivot frame 56 on the right side.

The left side partial pivot frame 56L and the right side partial pivot frame 56R are arranged to be separated from each other in the vehicle widthwise direction. As shown in FIG. 1, the left side partial pivot frame 56L extends downwardly from a rear end part of the left side partial main frame 54L. As shown in FIG. 3, the right side partial pivot frame 56R extends downwardly from a rear end part of the right side partial main frame 54R.

As shown in FIG. 1, the lower frame 46 is positioned below the main frame 42. A gusset 58 is connected to a rear part of the head pipe 40. The gusset 58 is connected to the rear part of the head pipe 40 and a front end part of the main frame 42. The lower frame 46 is connected, via the gusset 58, to the rear part of the head pipe 40. As will be described below, the lower frame 46 is capable of being detached from the gusset 58. At a location below the main frame 42, the lower frame 46 extends rearwardly and downwardly.

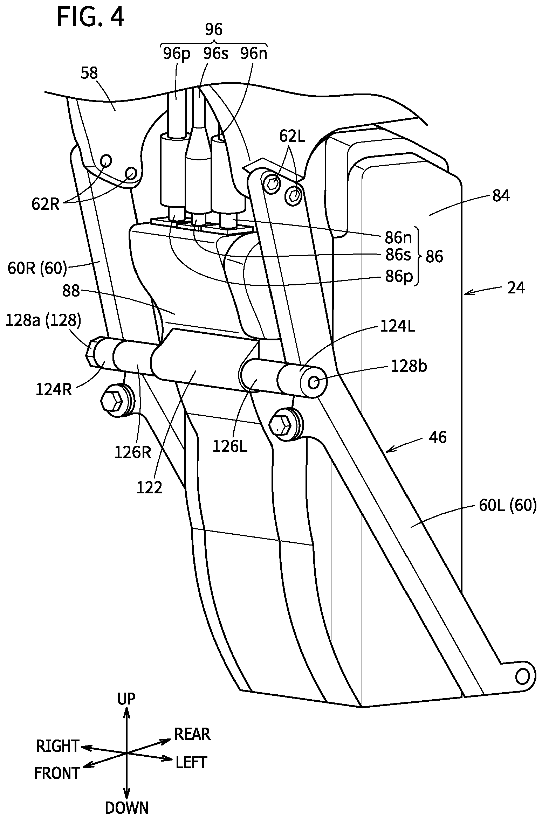

FIG. 4 is a perspective view of the battery 24 and the lower frame 46. The lower frame 46 includes a pair of left and right partial lower frames 60. The pair of left and right partial lower frames 60 are formed from a left side partial lower frame 60L, which is the partial lower frame 60 on the left side, and a right side partial lower frame 60R, which is the partial lower frame 60 on the right side. The left side partial lower frame 60L and the right side partial lower frame 60R are arranged to be separated from each other in the vehicle widthwise direction.

As shown in FIG. 1, the left side partial lower frame 60L extends rearwardly and downwardly from a left lower part of the gusset 58. An upper end part of the left side partial lower frame 60L is fastened by bolts 62L to the left lower part of the gusset 58. Accordingly, by removing the bolts 62L from the gusset 58, the left side partial lower frame 60L is detached from the main frame 42. An axial direction of each of the bolts 62L that fasten together the left side partial lower frame 60L and the gusset 58 is the vehicle widthwise direction.

As shown in FIG. 3, the right side partial lower frame 60R extends rearwardly and downwardly from a right lower part of the gusset 58. An upper end part of the right side partial lower frame 60R is fastened by bolts 62R to the right lower part of the gusset 58. Accordingly, by removing the bolts 62R from the gusset 58, the right side partial lower frame 60R is detached from the main frame 42. An axial direction of each of the bolts 62R that fasten together the right side partial lower frame 60R and the gusset 58 is the vehicle widthwise direction.

As shown in FIG. 2, the first cross pipe 48 is disposed between the left side partial main frame 54L and the right side partial main frame 54R. The longitudinal direction of the first cross pipe 48 is the vehicle widthwise direction. One end part of the first cross pipe 48 is connected to an intermediate part between a front end part of the left side partial main frame 54L and the rear end part of the left side partial main frame 54L. Another end part of the first cross pipe 48 is connected to an intermediate part between a front end part of the right side partial main frame 54R and the rear end part of the right side partial main frame 54R.

The second cross pipe 50 is disposed between the left side partial pivot frame 56L and the right side partial pivot frame 56R. The longitudinal direction of the second cross pipe 50 is the vehicle widthwise direction. One end part of the second cross pipe 50 is connected to an upper end part of the left side partial pivot frame 56L. Another end part of the second cross pipe 50 is connected to an upper end part of the right side partial pivot frame 56R.

FIG. 5 is a bottom view of the saddle riding type electric vehicle 10. The third cross pipe 52 is disposed between the left side partial pivot frame 56L and the right side partial pivot frame 56R. The longitudinal direction of the third cross pipe 52 is the vehicle widthwise direction. One end part of the third cross pipe 52 is connected to a lower end part of the left side partial pivot frame 56L. Another end part of the third cross pipe 52 is connected to a lower end part of the right side partial pivot frame 56R.

As shown in FIG. 1, the rear wheel suspension unit 20 includes a swing arm 64, a rear cushion 66, and a link mechanism 68.

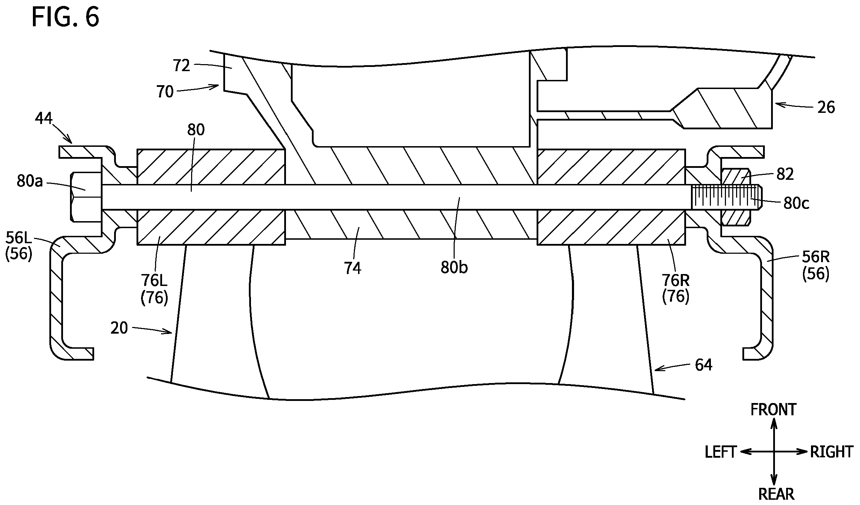

FIG. 6 is a cross-sectional view taken along line VI-VI of FIG. 3. A rearward projecting part 74 of a transmission case 72 of a transmission 70, which will be described later, is positioned between the left side partial pivot frame 56L and the right side partial pivot frame 56R. The rearward projecting part 74 projects out rearwardly from a rear part of the transmission case 72.

As shown in FIG. 5, the swing arm 64 includes a pair of left and right extending portions 76 and a connecting portion 78.

The pair of left and right extending portions 76 are formed from a left side extending portion 76L and a right side extending portion 76R. The left side extending portion 76L and the right side extending portion 76R are arranged to be separated from each other in the vehicle widthwise direction. The left side extending portion 76L and the right side extending portion 76R extend rearwardly from the pivot frame 44.

As shown in FIG. 6, a front end part of the left side extending portion 76L is positioned between the left side partial pivot frame 56L and the rearward projecting part 74 of the transmission case 72. A rear end part of the left side extending portion 76L is position on the left side of the rear wheel 14 (refer to FIG. 1) in the vehicle widthwise direction.

A front end part of the right side extending portion 76R is positioned between the right side partial pivot frame 56R and the rearward projecting part 74 of the transmission case 72. A rear end part of the right side extending portion 76R is positioned on the right side of the rear wheel 14 in the vehicle widthwise direction. The rear wheel 14 is pivotally supported by the rear end part of the left side extending portion 76L and the rear end part of the right side extending portion 76R.

As shown in FIG. 5, the connecting portion 78 is positioned frontwardly of the rear wheel 14 (refer to FIG. 1). The longitudinal direction of the connecting portion 78 is the vehicle widthwise direction. The connecting portion 78 connects the left side extending portion 76L and the right side extending portion 76R.

As shown in FIG. 6, a pivot shaft 80 is inserted through the left side partial pivot frame 56L, the left side extending portion 76L, the rearward projecting part 74 of the transmission case 72, the right side extending portion 76R, and the right side partial pivot frame 56R.

The longitudinal direction of the pivot shaft 80 is the vehicle widthwise direction. The pivot shaft 80 functions as a screw member having a head part 80a and a shank part 80b. The head part 80a is positioned in a recess formed on the left side of the left side partial pivot frame 56L in the vehicle widthwise direction. The shank part 80b extends in the rightward direction from the head part 80a. The shank part 80b passes through the left side partial pivot frame 56L, the front end part of the left side extending portion 76L, the rearward projecting part 74 of the transmission case 72, the front end part of the right side extending portion 76R, and the right side partial pivot frame 56R. A distal end part (a right end part) of the shank part 80b is positioned in a recess formed on the right side of the right side partial pivot frame 56R in the vehicle widthwise direction. A threaded portion 80c is formed on the distal end part of the shank part 80b. The threaded portion 80c is screw-engaged with a nut 82.

The pivot shaft 80 is inserted through the front end part of the left side extending portion 76L and the front end part of the right side extending portion 76R, whereby the swing arm 64 is pivotally supported on the pivot shaft 80. The swing arm 64 is capable of swinging about the pivot shaft 80.

As shown in FIG. 5, the link mechanism 68 is provided between the connecting portion 78 of the swing arm 64 and the third cross pipe 52. An upper end part of the rear cushion 66 is connected to the second cross pipe 50 (refer to FIG. 3). A lower end part of the rear cushion 66 is connected to one end part of the link mechanism 68. Another end part of the link mechanism 68 is connected to the third cross pipe 52.

As shown in FIG. 1, the seat 22 is disposed on an upper part of the vehicle body frame 18. A front side portion of the seat 22 is disposed along the main frame 42. Therefore, the front side portion of the seat 22 is positioned rearwardly and downwardly as it goes rearwardly. A rear side portion of the seat 22 extends rearwardly from a rear end of the front side portion. At a location above the rear wheel 14, the rear side portion of the seat 22 extends rearwardly and upwardly.

The battery 24 and the drive unit 26 are each supported by the vehicle body frame 18. Further, as will be described later, the battery 24 and the drive unit 26 are fastened to each other.

As shown in **FIG. 4****,** at a location below the main frame 42 (refer to **FIG. 1****),** the battery 24 is disposed between the left side partial lower frame 60L and the right side partial lower frame **60R.** As shown in **FIG. 1****,** when viewed in the vehicle widthwise direction, a portion of the lower frame 46 overlaps the battery **24.** In greater detail, when viewed in the vehicle widthwise direction, a portion of the left side partial lower frame 60L overlaps the battery **24.** The portion of the left side partial lower frame 60L is positioned on the left side of the battery 24 in the vehicle widthwise direction. Further, as shown in FIG. 3, when viewed in the vehicle widthwise direction, a portion of the right side partial lower frame 60R overlaps the battery 24. The portion of the right side partial lower frame 60R is positioned on the right side of the battery 24 in the vehicle widthwise direction.

As shown in FIG. 1, when viewed in the vehicle widthwise direction (in a side view), the lower frame 46 extends and overlaps from an intermediate part of a front surface part of the battery 24 in the upward-downward direction, toward a rear lower end part of the battery 24. More specifically, the lower frame 46 crosses laterally over the sides of the battery 24.

As shown in FIG. 1, the shape of the battery 24 is substantially quadrilateral. In greater detail, the shape of the battery 24 is substantially rectangular. The longitudinal direction of the battery 24 lies along the upward-downward direction.

As shown in FIG. 4, the battery 24 includes a battery case 84 and a battery side connector 86. The shape of the battery case 84 is substantially rectangular. A plurality of battery cells (not shown) and a circuit board (not shown) are accommodated in the interior of the battery case 84. The plurality of battery cells are electrically connected in series. The circuit board (a control circuit board, an electronic circuit board) detects, for example, the voltage, the current, and the temperature of the battery 24.

The battery case 84 includes a bulging portion 88. The bulging portion 88 is disposed on a front surface of the battery case 84. The bulging portion 88 bulges in a frontward direction (toward a front side) from the front surface of the battery case 84. As shown in FIG. 3, the front surface side of the bulging portion 88 overlaps the lower frame 46 in a side view. A front surface of the bulging portion 88 lies along the lower frame 46 in a side view. As shown in FIG. 4, an upper surface of the bulging portion 88 extends in the horizontal direction (the frontward-rearward direction and the vehicle widthwise direction).

The battery side connector 86 is a battery terminal that is disposed on the upper surface of the bulging portion 88. As shown in FIG. 3, the battery side connector 86 overlaps the lower frame 46 in a side view. Further, the battery side connector 86 is positioned below the main frame 42 in a side view. As shown in FIG. 4, at a location below a front side portion of the main frame 42 (refer to FIG. 3), the battery side connector 86 is disposed between the pair of left and right partial lower frames 60.

As shown in FIG. 4, the battery side connector 86 includes a positive electrode connector 86p, a negative electrode connector 86n, and a signal connector 86s. The positive electrode connector 86p, the negative electrode connector 86n, and the signal connector 86s are disposed on the upper surface of the bulging portion 88, and are spaced apart from one another in the vehicle widthwise direction. Specifically, the signal connector 86s is disposed at the center of the upper surface of the bulging portion 88 in the vehicle widthwise direction. The negative electrode connector 86n is disposed on the left side of the upper surface of the bulging portion 88 in the vehicle widthwise direction. The positive electrode connector 86p is disposed on the right side of the upper surface of the bulging portion 88 in the vehicle widthwise direction. The positive electrode connector 86p, the negative electrode connector 86n, and the signal connector 86s extend in the upward direction from the upper surface of the bulging portion 88.

The positive electrode connector 86p is electrically connected to the positive electrode side of a battery cell group including the plurality of battery cells. The negative electrode connector 86n is electrically connected to the negative electrode side of the battery cell group including the plurality of battery cells. The signal connector 86s is electrically connected to the circuit board provided in the battery 24.

As shown in FIG. 1, at a location below the main frame 42, the drive unit 26 is disposed between the battery 24 and the pivot frame 44 in the frontward-rearward direction. The drive unit 26 is positioned rearwardly of the battery 24.

As shown in FIG. 3, the drive unit 26 includes a motor 90, an inverter 92, and the transmission 70. The drive unit 26 is constituted integrally by the motor 90, the inverter 92, and the transmission 70. The battery 24 is positioned frontwardly of the drive unit 26. Therefore, as shown in FIG. 2, the battery 24, the motor 90, the inverter 92 (refer to FIG. 3), and the transmission 70 (refer to FIG. 3) overlap one another as viewed in the frontward-rearward direction.

As shown in FIG. 3, the motor 90, the inverter 92, and the transmission 70 are lined up in the upward-downward direction at a location rearwardly of the battery 24. The motor 90 and the inverter 92 are positioned above the transmission 70. The transmission 70 is positioned below the motor 90 and the inverter 92.

The inverter 92 is disposed adjacent to the motor 90. The inverter 92 is provided in the interior of the motor 90. Alternatively, the inverter 92 may be provided on an outer surface of a motor case 94 described later.

As shown in FIG. 3, the saddle riding type electric vehicle 10 is further equipped with a harness 96 and a control unit 190. The control unit 190 is an electronic control unit (ECU) that is provided in the saddle riding type electric vehicle 10. As shown in FIG. 1, the control unit 190 is positioned rearwardly of the battery 24 and the drive unit 26. The control unit 190 is positioned below the seat 22. As shown in FIG. 3, the harness 96 serves to electrically connect the battery 24 and the drive unit 26, and also serves to electrically connect the battery 24 and the control unit 190.

A portion of the harness 96 extends from a rear part of the motor 90 to the upper side of the bulging portion 88 (refer to FIG. 4) while passing above the drive unit 26 and the battery 24. The portion of the harness 96 serves to electrically connect the battery 24 and the drive unit 26.

Another portion of the harness 96 extends from an upper part of the control unit 190 to the upper side of the bulging portion 88 while passing above the drive unit 26 and the battery 24. The other portion of the harness 96 serves to electrically connect the battery 24 and the control unit 190.

As shown in FIG. 4, the harness 96 includes a positive electrode side harness 96p, a negative electrode side harness 96n, and a signal harness 96s. The positive electrode side harness 96p and the negative electrode side harness 96n make up a part of the above-described harness 96. The signal harness 96s makes up another part of the above-described harness 96.

The positive electrode side harness 96p is capable of being attached to and detached from the positive electrode connector 86p of the battery 24. The negative electrode side harness 96n is capable of being attached to and detached from the negative electrode connector 86n of the battery 24. The signal harness 96s is capable of being attached to and detached from the signal connector 86s of the battery 24.

When the positive electrode connector 86p and the positive electrode side harness 96p are connected, and also the negative electrode connector 86n and the negative electrode side harness 96n are connected, a DC electrical power is capable of being supplied from the battery 24 to the inverter 92 (refer to FIG. 3). The inverter 92 converts the DC electrical power into an AC electrical power.

Further, when the signal connector 86s and the signal harness 96s are connected, signals are capable of being transmitted and received between the circuit board provided in the battery 24 and the control unit 190.

Signals, which indicate the state of the respective components that are provided in the saddle riding type electric vehicle 10, are input to the control unit 190. Further, the control unit 190 outputs control signals and the like to the respective components. Specifically, the respective components that are provided in the saddle riding type electric vehicle 10, for example, are the battery 24 and the drive unit 26. The control unit 190 acquires information such as the voltage, the current, and the temperature and the like of the battery 24 from the circuit board of the battery 24 via the signal harness 96s. The control unit 190, via the signal harness 96s, outputs control signals to the circuit board of the battery 24.

The inverter 92 serves to control the driving of the motor 90, which is the drive source of the saddle riding type electric vehicle 10.

As shown in FIG. 3, the motor 90 includes the motor case 94 and a motor body 97.

As shown in FIG. 2, the motor case 94 is a tubular case whose interior is closed. The longitudinal direction of the motor case 94 is the vehicle widthwise direction.

As shown in FIG. 3, the motor body 97 is accommodated in the interior of the motor case 94. Moreover, in FIG. 3, the shape of the motor body 97 is schematically illustrated.

The motor body 97 is an AC motor. The motor body 97 includes a drive shaft member 97a, which is a motor shaft member. The longitudinal direction of the drive shaft member 97a is the vehicle widthwise direction.

As shown in FIG. 3, the motor body 97, by being driven by the AC electrical power supplied from the inverter 92, rotates the drive shaft member 97a. The drive shaft member 97a transmits the driving force (output rotation) of the motor body 97 to the transmission 70.

The transmission 70 is a transmission that is capable of changing a gear ratio. Alternatively, the transmission 70 may be a speed reducing gear having a fixed gear ratio. The transmission 70 is, for example, a manual transmission, but is not limited thereto. The transmission 70 includes the transmission case 72 and a transmission body 100.

The transmission case 72 is a case whose interior is closed. The transmission case 72 extends along the vehicle widthwise direction.

In the present embodiment, the motor case 94 and the transmission case 72 are integrally formed. The interior of the motor case 94 and the interior of the transmission case 72 communicate with each other.

The transmission body 100 is accommodated in the transmission case 72. Moreover, in FIG. 3, the shape of the transmission body 100 is schematically illustrated.

The transmission body 100 includes an output shaft member 100a. The longitudinal direction of the output shaft member 100a is the vehicle widthwise direction. As shown in FIG. 1, the output shaft member 100a is positioned rearwardly of and below the drive shaft member 97a. The transmission body 100 (refer to FIG. 3) changes the speed of the output rotation of the drive shaft member 97a using a plurality of non-illustrated gears. The output shaft member 100a is rotated by the output rotation whose speed has been changed.

As shown in FIG. 1, a drive sprocket 102 is provided on a left end part of the output shaft member 100a. A driven sprocket 104 is provided on the rear wheel 14. A drive chain 106 is extended in a bridging manner between the drive sprocket 102 and the driven sprocket 104.

The output shaft member 100a transmits motive power to the rear wheel 14, via the drive sprocket 102, the drive chain 106, and the driven sprocket 104. The rear wheel 14 is rotated by the transmitted motive power. By the rear wheel 14 being rotated, the saddle riding type electric vehicle 10 is made to travel frontward.

According to the present embodiment, the battery 24 is fastened to the lower frame 46. The drive unit 26 is fastened to the pivot frame 44. The battery 24 and the drive unit 26 are fastened to each other. More specifically, as shown in FIG. 3, the motor 90 is fastened to the pivot frame 44 and the battery 24. The transmission 70 is also fastened to the pivot frame 44 and the battery 24.

As shown in FIG. 3, a fastening point 110 at which the drive unit 26 is fastened to the pivot frame 44 is positioned rearwardly of the output shaft member 100a in the frontward-rearward direction of the saddle riding type electric vehicle 10. In the present embodiment, a plurality of the fastening points 110 are provided.

Further, the fastening points 110 at which the drive unit 26 is fastened to the pivot frame 44 are positioned rearwardly of the drive shaft member 97a and the output shaft member 100a in the frontward-rearward direction of the saddle riding type electric vehicle 10.

Further, a fastening point 112 at which the battery 24 and the motor 90 are fastened to each other is positioned above a fastening point 114 at which the battery 24 is fastened to the lower frame 46. In the present embodiment, a plurality of the fastening points 114 are provided.

Further, the fastening points 114 at which the battery 24 is fastened to the lower frame 46 are provided on the front surface part and a rear surface part of the battery 24.

In addition, a center of gravity 116 of the battery 24, a center of gravity 118 of the motor 90, a center of gravity 120 of the transmission 70, and a center of gravity 121 of the drive unit 26 are located inside a region 123 formed by connecting the above-described fastening points 110, 112, 114.

A detailed description will be given below concerning the fastening of the vehicle body frame 18, the battery 24, and the drive unit 26.

At first, a description will be given concerning the fastening of the battery 24 to the lower frame 46.

As shown in FIG. 4, a frontward projecting part 122, which projects out frontwardly, is provided on the front surface part of the battery 24. The frontward projecting part 122, at the front surface part of the battery 24, projects out frontwardly from below the bulging portion 88. A hole that penetrates in the vehicle widthwise direction is formed in the frontward projecting part 122.

A left side frontward projecting part 124L is provided on the left side partial lower frame 60L. A right side frontward projecting part 124R is provided on the right side partial lower frame 60R. The left side frontward projecting part 124L and the right side frontward projecting part 124R are provided in an intermediate part between a lower end part and an upper end part of the lower frame 46. The left side frontward projecting part 124L and the right side frontward projecting part 124R project out frontwardly from the intermediate part of the lower frame 46. Holes that penetrate in the vehicle widthwise direction are formed in the left side frontward projecting part 124L and the right side frontward projecting part 124R. The hole in the left side frontward projecting part 124L is a threaded hole.

A tubular collar 126L is disposed between the left side frontward projecting part 124L and the frontward projecting part 122 of the battery 24. A tubular collar 126R is disposed between the right side frontward projecting part 124R and the frontward projecting part 122 of the battery 24.

A bolt 128 is inserted through the left side frontward projecting part 124L, the collar 126L, the frontward projecting part 122 of the battery 24, the collar 126R, and the right side frontward projecting part 124R. A head part 128a of the bolt 128 is positioned more on the right side in the vehicle widthwise direction than the right side frontward projecting part 124R. A threaded portion is formed on a shank part 128b of the bolt 128. The threaded portion of the bolt 128 is screw-engaged in the threaded hole of the left side frontward projecting part 124L, whereby the front surface part of the battery 24 is fastened to the intermediate part of the lower frame 46. Therefore, in the side view of FIG. 3, the position of the bolt 128 is the position of a fastening point 114a at which the front surface part of the battery 24 is fastened to the intermediate part of the lower frame 46, among the plurality of fastening points 114.

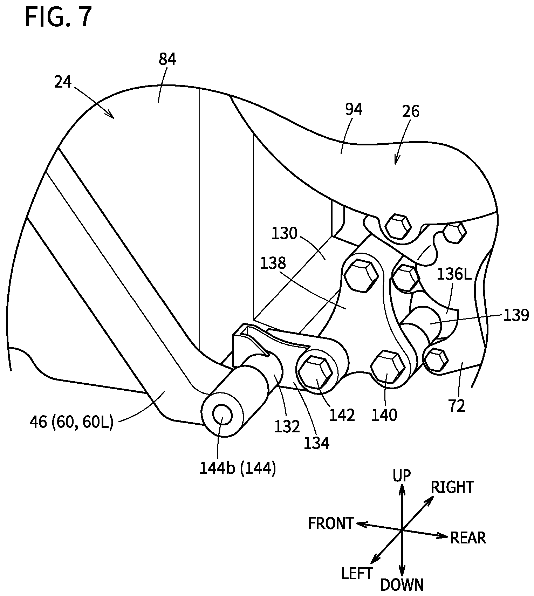

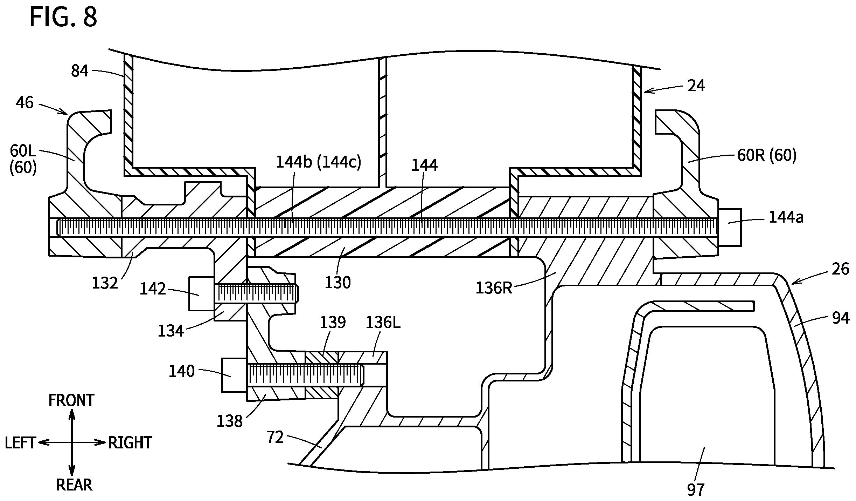

FIG. 7 is a perspective view showing the fastening of the lower end part of the lower frame 46 and a front part of the transmission case 72 to a lower part of the battery 24. FIG. 8 is a cross-sectional view taken along line VIII-VIII of FIG. 3.

As shown in FIG. 7, a rearward projecting part 130, which projects out rearwardly, is provided on the rear surface part of the battery 24. On the rear surface part of the battery 24, the rearward projecting part 130 projects out rearwardly from a central part of a rear end part of the battery 24. Lower end parts of the left side partial lower frame 60L and the right side partial lower frame 60R are positioned more on the outer side in the vehicle widthwise direction than the rearward projecting part 130.

A tubular collar 132 is disposed between the lower end part of the left side partial lower frame 60L and the rearward projecting part 130 of the battery 24. The collar 132 extends in the vehicle widthwise direction. A connecting portion 134 extending rearwardly is provided at a right end part of the collar 132.

As shown in FIG. 8, a left side frontward projecting part 136L and a right side frontward projecting part 136R are provided on a front surface of the transmission case 72. The left side frontward projecting part 136L projects out frontwardly from a left portion of the front surface of the transmission case 72. The right side frontward projecting part 136R projects out frontwardly from a right portion of the front surface of the transmission case 72. The right side frontward projecting part 136R is positioned between the lower end part of the right side partial lower frame 60R and the rearward projecting part 130 of the battery 24.

A plate-shaped connecting plate 138 is provided between the connecting portion 134 of the collar 132 and the left side frontward projecting part 136L of the transmission case 72. A front end part of the connecting plate 138 faces a rear end part of the connecting portion 134 in the vehicle widthwise direction. A rear end part of the connecting plate 138 faces a front end part of the left side frontward projecting part 136L in the vehicle widthwise direction. A tubular collar 139 is disposed between the rear end part of the connecting plate 138 and the front end part of the left side frontward projecting part 136L in the vehicle widthwise direction. The rear end part of the connecting plate 138 and the left side frontward projecting part 136L are fastened to each other by using a bolt 140 passing through the collar 139. The front end part of the connecting plate 138 and the rear end part of the connecting portion 134 of the collar 132 are fastened to each other by using a bolt 142.

The lower end part of the left side partial lower frame 60L and the lower end part of the right side partial lower frame 60R are fastened in the vehicle widthwise direction by a bolt 144. In greater detail, a head part 144a of the bolt 144 is positioned more on the right side in the vehicle widthwise direction than the lower end part of the right side partial lower frame 60R. A shank part 144b of the bolt 144 is inserted in the vehicle widthwise direction through the lower end part of the right side partial lower frame 60R, the right side frontward projecting part 136R of the transmission case 72, the rearward projecting part 130 of the battery 24, the collar 132, and the left side partial lower frame 60L. A threaded portion 144c is formed on the shank part 144b. A threaded hole is formed in the lower end part of the left side partial lower frame 60L.

The threaded portion 144c of the bolt 144 is screw-engaged in the threaded hole in the lower end part of the left side partial lower frame 60L, whereby the lower end part of the right side partial lower frame 60R, the right side frontward projecting part 136R, the rearward projecting part 130 of the battery 24, the collar 132, and the lower end part of the left side partial lower frame 60L are fastened together. In accordance with this feature, the battery 24 is fastened to the lower end part of the lower frame 46. Further, the battery 24 and the transmission 70 are fastened to each other. Furthermore, the transmission 70 is fastened to the lower end part of the lower frame 46. Therefore, in the side view of FIG. 3, the position of the bolt 144 is the position of a fastening point 114b at which the rear surface part of the battery 24 is fastened to the lower end part of the lower frame 46, among the plurality of fastening points 114. Further, the fastening point 114b is also a fastening point at which the battery 24 and the transmission 70 are fastened to each other.

Next, a detailed description will be given concerning the fastening of the transmission 70 to the pivot frame 44.

As shown in FIG. 6, the pivot shaft 80 passes through the lower end part of the left side partial pivot frame 56L, the front end part of the left side extending portion 76L, the rearward projecting part 74 of the transmission case 72, the front end part of the right side extending portion 76R, and the lower end part of the right side partial pivot frame 56R. The pivot shaft 80 and the nut 82 are screw-engaged with each other, whereby the lower end part of the left side partial pivot frame 56L and the lower end part of the right side partial pivot frame 56R are fastened to each other. In accordance with this feature, the transmission 70 is fastened to the pivot frame 44. Therefore, in the side view of FIG. 3, the position of the pivot shaft 80 is the position of a fastening point 110b at which the drive unit 26 is fastened to the lower end part of the pivot frame 44, among the plurality of fastening points 110.

As shown in FIG. 5, two supporting plate portions 150 are provided at a central part of the third cross pipe 52. The two supporting plate portions 150 are provided at the central part of the third cross pipe 52 so as to be separated from each other in the vehicle widthwise direction. The two supporting plate portions 150 project out frontwardly from the central part of the third cross pipe 52.

The rearward projecting part 74 of the transmission case 72 is positioned between the two supporting plate portions 150. A bolt 152 is inserted in the vehicle widthwise direction through the rearward projecting part 74 and the two supporting plate portions 150. The bolt 152 is screwed-engaged with a nut 154 to fasten the rearward projecting part 74 and the two supporting plate portions 150. In accordance with this feature, the transmission 70 and the pivot frame 44 are fastened to each other via the third cross pipe 52. Therefore, in the side view of FIG. 3, the position of the bolt 152 is the position of a fastening point 110c at which the drive unit 26 is fastened to the lower end part of the pivot frame 44, among the plurality of fastening points 110.

Next, a detailed description will be given concerning the fastening of the motor 90 to the pivot frame 44.

As shown in FIG. 2, a rearward projecting part 156 is provided on the motor case 94. The rearward projecting part 156 extends rearwardly and upwardly from an upper part of the motor case 94. Two connecting plates 158 of a plate shape are provided in a central part of the second cross pipe 50. The two connecting plates 158 are provided on the second cross pipe 50 with a gap therebetween in the vehicle widthwise direction. The two connecting plates 158 project out frontwardly. The rearward projecting part 156 of the motor case 94 is positioned between the two connecting plates 158.

A bolt 160 is inserted in the vehicle widthwise direction through the two connecting plates 158 and the rearward projecting part 156 of the motor case 94. The bolt 160 is screw-engaged with a nut 162, whereby the two connecting plates 158 and the rearward projecting part 156 of the motor case 94 are fastened together. In accordance with this feature, the motor 90 is fastened, via the second cross pipe 50, to the upper end part of the pivot frame 44. Therefore, in the side view of FIG. 3, the position of the bolt 160 is the position of a fastening point 110a at which the drive unit 26 is fastened to the upper end part of the pivot frame 44, among the plurality of fastening points 110.

Next, a detailed description will be given concerning the fastening of the battery 24 and the drive unit 26.

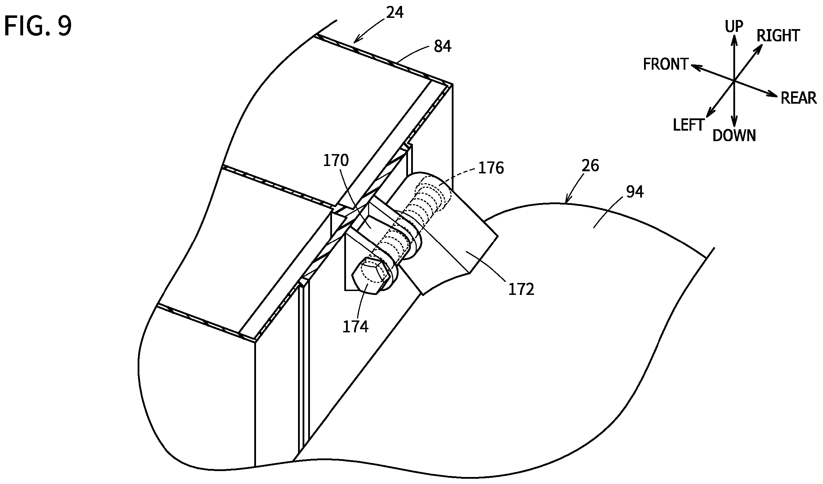

FIG. 9 is a perspective view showing the fastening of a rear part of the battery 24 and an upper part of the motor 90.

A rearward projecting part 170 is provided on the rear surface part of the battery 24. The rearward projecting part 170 projects out rearwardly from an upper side portion of the rear surface part of the battery 24. A frontward projecting part 172 is provided on the motor case 94. The frontward projecting part 172 extends frontwardly and upwardly from the upper part of the motor case 94. When viewed in the vehicle widthwise direction, a portion of the rearward projecting part 170 of the battery 24 and a portion of the frontward projecting part 172 of the motor case 94 overlap each other. A bolt 174 is inserted in the vehicle widthwise direction through the rearward projecting part 170 of the battery 24 and the frontward projecting part 172 of the motor case 94. The bolt 174 is screw-engaged with a nut 176, whereby the battery 24 and the motor 90 are fastened to each other. Therefore, in the side view of FIG. 3, the position of the bolt 174 is the position of the fastening point 112 at which the battery 24 and the drive unit 26 are fastened to each other.

Moreover, as described above, the lower end part of the left side partial lower frame 60L and the lower end part of the right side partial lower frame 60R are fastened to each other in the vehicle widthwise direction by the bolt 144, whereby the battery 24 and the transmission 70 are fastened to each other (refer to FIG. 8). Therefore, in the side view of FIG. 3, the position of the bolt 144 is also the position of the fastening point 114 at which the battery 24 and the transmission 70 are fastened to each other.

Further, as shown in FIG. 3, the motor case 94 is suspended by a hanger plate 178 that extends downwardly from the first cross pipe 48. However, in the present embodiment, the hanger plate 178 is not an essential constituent element.

The battery 24, as will be discussed hereinafter, is capable of being replaced with respect to the saddle riding type electric vehicle 10. Moreover, the replacement of the battery 24 is carried out, for example, at a time when the SOC of the battery 24 that is mounted on the saddle riding type electric vehicle 10 is low.

A description will be given concerning a case of detaching the battery 24 from the saddle riding type electric vehicle 10.

As shown in FIG. 4, in a state in which the driving of the saddle riding type electric vehicle 10 (refer to FIG. 1) is stopped, a user (an operator) detaches the harness 96 from the battery side connector 86. Next, by removing the bolts 62L, 62R, 128, and 144 that fasten the lower frame 46, the user detaches the lower frame 46 from the saddle riding type electric vehicle 10. Next, the user removes the bolt 174 fastening the battery 24 and the motor case 94, and the bolt 142 connecting the battery 24 and the transmission case 72. In accordance with this feature, the battery 24 can be detached from the saddle riding type electric vehicle 10.

A description will be given concerning a case of installing the battery 24 in the saddle riding type electric vehicle 10.

First, the user fastens the battery 24 that is in a fully charged state and the motor case 94 to each other using the bolt 174. Further, the user fastens the battery 24 and the transmission case 72 to each other using the bolt 142. Next, the user fastens the lower frame 46 and the battery 24 to each other using the bolts 62L, 62R, 128, and 144. In accordance with this feature, the battery 24 is installed in the saddle riding type electric vehicle 10. Next, the user connects the harness 96 to the battery side connector 86.

In this manner, in the replacement of the battery 24, only the lower frame 46 and the battery 24 are detached from the saddle riding type electric vehicle 10. This makes it possible to maintain the fixation of the drive unit 26 to the vehicle body frame 18 without affecting the fastening between the vehicle body frame 18 and the drive unit 26.

Moreover, according to the present embodiment, although a description has been given concerning a case in which the saddle riding type electric vehicle 10 is a trials vehicle, the present disclosure is not necessarily limited to this feature. The saddle riding type electric vehicle 10 may be any of various types of electric vehicles, such as an on road type electric vehicle or a scooter type electric vehicle. Further, according to the present embodiment, although a description has been given concerning a case in which the saddle riding type electric vehicle 10 is a two-wheeled electric vehicle, the present disclosure is not necessarily limited to this feature. The saddle riding type electric vehicle 10 may be any of various types of electric vehicles, such as a three-wheeled electric vehicle.

In relation to the above-described embodiment, the following supplementary notes are further disclosed.

### Supplementary Note 1

The saddle riding type vehicle (10) according to the present disclosure includes: the vehicle body frame (18) that includes the head pipe (40), the main frame (42) extending rearwardly from the head pipe, the lower frame (46) positioned below the main frame and extending rearwardly and downwardly, and the pivot frame (44) extending downwardly from the rear end part of the main frame; the drive unit (26) supported by the vehicle body frame; and the battery (24) that is supported by the vehicle body frame and supplies electrical power to the drive unit, wherein the battery is fastened to the lower frame, the drive unit is fastened to the pivot frame, and the drive unit and the battery are fastened to each other.

According to at least preferred embodiments, the battery is fastened to the lower frame without being fastened to the pivot frame. The drive unit is fastened to the pivot frame without being fastened to the lower frame. The lower frame and the pivot frame are indirectly fastened via the battery and the drive unit. According to this feature, the drive unit and the battery can be reliably fixed in a state where the vehicle body frame is moderately bendable.

### Supplementary Note 2

In the saddle riding type vehicle according to Supplementary Note **1,** the drive unit may include the motor (90) that is a drive source of the saddle riding type vehicle, and the transmission (70) that is connected to the motor and changes the speed of output rotation of the motor, the motor may be fastened to the pivot frame and fastened to the battery, and the transmission may be fastened to the pivot frame and fastened to the battery.

According to preferred embodiments, the battery and the motor are connected to each other, and the battery and the transmission are connected to each other. As a result, the battery, the motor, and the transmission can be reliably fixed to the vehicle body frame.

### Supplementary Note 3

In the saddle riding type vehicle according to Supplementary Note **2,** the transmission may include the output shaft member (100a) that outputs motive power to the rear wheel (14) of the saddle riding type vehicle, and the fastening point

(110) at which the drive unit is fastened to the pivot frame may be positioned rearwardly of the output shaft member in the frontward-rearward direction of the saddle riding type vehicle.

According to preferred embodiments, since the transmission is fastened to the pivot frame positioned rearwardly of the output shaft member, the entire length of the main frame can be increased. As a result, the bending of the main frame can be effectively utilized.

### Supplementary Note 4

In the saddle riding type vehicle according to Supplementary Note **3,** the motor may include the drive shaft member (97a) that outputs a driving force, the drive shaft member may be disposed above the output shaft member, and the fastening point at which the drive unit is fastened to the pivot frame may be positioned rearwardly of the drive shaft member and the output shaft member.

According to preferred embodiments, the drive unit is disposed frontwardly of the pivot frame, and the motor and the transmission are disposed in the upward-downward direction, and therefore, the drive unit can be efficiently fastened to the vehicle body frame. Further, since the motor having a larger weight than the transmission is disposed on the upper side, the motor can be disposed close to the rider riding on the saddle riding type vehicle. This improves the steerability of the saddle riding type vehicle by the rider.

### Supplementary Note 5

In the saddle riding type vehicle according to any one of Supplementary Notes 2 to **4,** the battery may be positioned frontwardly of the drive unit, and overlap the motor and the transmission as viewed in the frontward-rearward direction.

According to preferred embodiments, the battery can be efficiently disposed frontwardly of the drive unit in which the motor and the transmission are lined up in the upward-downward direction. Further, since the battery is disposed adjacent to the motor and the transmission in the frontward-rearward direction, the battery can be easily fastened to the motor and the transmission. Further, by disposing the battery frontwardly of the drive unit, the space in front of the drive unit can be effectively utilized.

### Supplementary Note 6

In the saddle riding type vehicle according to any one of Supplementary Notes 2 to 5, the battery may be fastened to the lower end part of the lower frame and to the intermediate part of the lower frame that is positioned between the lower end part and the upper end part of the lower frame, and the fastening point (112) at which the battery and the motor are fastened to each other may be positioned above the fastening point at which the battery is fastened to the lower frame.

According to preferred embodiments, the fastening point at which the battery is fastened to the lower frame is positioned below the fastening point at which the battery and the motor are fastened to each other. This can alleviate the restraint of the bending of the head pipe and the main frame with respect to the battery. Further, since the fastening point at which the battery and the motor are fastened to each other is positioned above the fastening point at which the battery is fastened to the lower frame, the rigidity of the battery can be ensured.

### Supplementary Note 7

In the saddle riding type vehicle according to Supplementary Note **6,** at least a portion of the lower frame may overlap the battery as viewed in the vehicle widthwise direction, and the fastening points at which the battery is fastened to the lower frame may be provided on each of the front surface part and the rear surface part of the battery.

According to preferred embodiments, since the battery is supported from the front and rear, the battery can be stably held.

## Claims

1. A saddle riding type vehicle (10) comprising:
a vehicle body frame (18) that includes a head pipe (40), a main frame (42) extending rearwardly from the head pipe, a lower frame (46) positioned below the main frame and extending rearwardly and downwardly, and a pivot frame (44) extending downwardly from a rear end part of the main frame;
a drive unit (26) supported by the vehicle body frame; and
a battery (24) supported by the vehicle body frame and configured to supply electrical power to the drive unit,
wherein the battery is fastened to the lower frame,
the drive unit is fastened to the pivot frame, and
the drive unit and the battery are fastened to each other.

2. The saddle riding type vehicle according to claim **1,** wherein
the drive unit includes a motor (90) that is a drive source of the saddle riding type vehicle, and a transmission (70) connected to the motor and configured to change a speed of output rotation of the motor,
the motor is fastened to the pivot frame and is fastened to the battery, and
the transmission is fastened to the pivot frame and is fastened to the battery.

3. The saddle riding type vehicle according to claim 2, wherein
the transmission includes an output shaft member (100a) configured to output motive power to a rear wheel (14) of the saddle riding type vehicle, and
a fastening point (110) at which the drive unit is fastened to the pivot frame is positioned rearwardly of the output shaft member in a frontward-rearward direction of the saddle riding type vehicle.

4. The saddle riding type vehicle according to claim 3,
wherein
the motor includes a drive shaft member (97a) configured to output a driving force,
the drive shaft member is disposed above the output shaft member, and
the fastening point at which the drive unit is fastened to the pivot frame is positioned rearwardly of the drive shaft member and the output shaft member.

5. The saddle riding type vehicle according to any one of claims 2 to 4, wherein
the battery is positioned frontwardly of the drive unit, and overlaps the motor and the transmission as viewed in a frontward-rearward direction.

6. The saddle riding type vehicle according to any one of claims 2 to 5, wherein
the battery is fastened to a lower end part of the lower frame and to an intermediate part of the lower frame that is positioned between the lower end part and an upper end part of the lower frame, and
a fastening point (112) at which the battery and the motor are fastened to each other is positioned above a fastening point at which the battery is fastened to the lower frame.

7. The saddle riding type vehicle according to claim 6,
wherein
at least a portion of the lower frame overlaps the battery as viewed in a vehicle widthwise direction, and
the fastening point at which the battery is fastened to the lower frame is provided on each of a front surface part and a rear surface part of the battery.
